# NEW EUROPEAN PATENT SPECIFICATION

(11) **EP 2 773 223 B2**
(45) Date of publication and mention of the opposition decision: **06.03.2024**
(45) Mention of the grant of the patent: 20.03.2019
(21) Application number: 12845681.1
(22) Date of filing: 02.11.2012
(51) Int. Cl.: A23L 15/00, A23L 27/60, A23L 29/212, A23L 11/00, A23L 33/105, A23L 7/10, A23L 29/269, A23L 29/262, A23L 29/25, A23L 29/238, A23L 29/10, A21D 2/16, A21D 2/18, A21D 10/00, A21D 13/80, A21D 2/26

(54) **EGGLESS MAYONNAISE COMPRISING PLANT-BASED EGG SUBSTITUTE**
EIERLOSE MAYONNAISE MIT PFLANZLICHEM EIERSATZ
MAYONNAISE SANS OEUFS À BASE DE SUBSTITUT D'OEUF VÉGÉTAL

(30) Priority: 02.11.2011 US 201161554928 P; 06.04.2012 US 201261621425 P
(43) Date of publication of application: 10.09.2014
(73) Proprietor: Just, Inc., San Francisco, CA 94110 (US)
(72) Inventor: TETRICK, Joshua, San Francisco , CA 94103 (US); BOOT, Johannes , Hendrikus, Antonius, San Francisco , CA 94103 (US); JONES , Christopher, Michael, San Francisco , CA 94103 (US); CLEMENTS , Megan , Alexander, San Francisco , CA 94103 (US); OLIVEIRA , Morgan , Ann, San Francisco ,CA 94103 (US); ALBANELLO , Lorenzo, San Francisco , CA 94103 (US)
(74) Representative: Mewburn Ellis LLP
(86) International application number: PCT/US2012/063453
(87) International publication number: WO 2013/067453

(56) References cited:
- WO-A1-2010/004359
- WO-A1-2012/089448
- WO-A2-86/05362
- JP-A- H11 299 435
- US-A- 4 120 986
- US-A- 4 777 045
- US-A1- 2006 003 077
- US-A1- 2008 181 990
- US-A1- 2009 017 166
- US-A1- 2009 041 901
- US-A1- 2011 008 522
- US-B2- 6 878 394
- Anonymous: "Egg-free soy-free mayonnaise | Sure Foods Living - gluten-free and allergen-free living", , 20 April 2011 (2011-04-20), XP055220216, Retrieved from the Internet: URL:http://surefoodsliving.com/2011/04/egg -free-soy-free-mayonnaise/ [retrieved on 2015-10-12]
- N.N.: "Egg-Free Mayonnaise Range Product Variants Product Variant Flavours Format Type Claims Still Selling Egg-Free Mayonnaise Plain with Cold Pressed Flax Oil Unflavoured/Plain - - - Egg-Free Mayonnaise Garlic Garlic - - - Egg-Free Mayonnaise Chilli Sweet & Chilli & Spice/Spicy - - - and Egg-Free Mayonna", gnpd, 30 April 2008 (2008-04-30), XP055220120, Retrieved from the Internet: URL:http://www.gnpd.com/sinatra/recordpage /899314/from_search/CdbWUhC7cf/ [retrieved on 2015-10-12]
- DATABASE FSTA [Online] INTERNATIONAL FOOD SERVIcE (IFIS), FRANkFURT-MAIN, DE; 1996, GUENTHER S: "Egg free Madeira cakes. (translated) TIOL- Eifreie Ruehrkuchen.", XP002745834, Database accession no. FS-1996-09-M-0114 & GUENTHER S: "Egg free Madeira cakes. (translated)", SUSSWAREN, vol. 39, no. 6, 1995, pages 20-22, Frankfurt Main

## Description

### TECHNICAL FIELD

Disclosed herein is an egg substitute and a method of manufacturing the same, and compositions comprising the egg substitute, including edible compositions such as baked goods.

### BACKGROUND OF THE INVENTION

Eggs are a versatile and near ubiquitous food and food component. The market for egg ingredients has been estimated to be $1.8 billion domestically and $6 billion globally, and continues to grow. Eggs are highly valued for numerous reasons. Eggs not only provide high nutritional content, they are also an essential component of a wide range of food products, ranging from, but not limited to: breads, cakes, cookies, custards, soufflés, muffins, scones, biscuits, pasta, dressings, sauces, and ice cream.

However, eggs have a number of drawbacks. For example, eggs contain high levels of cholesterol and saturated fats, which increases risk for cardiovascular diseases and obesity. Therefore, consumers that desire to reduce their risk of cardiovascular disease, or are otherwise concerned over maintaining a healthy diet and weight, represent an untapped market for eggs or egg-containing products. Other consumers that would benefit from the high nutritional content and enjoyment of egg-containing products may be prevented from doing so due to food allergies or other dietary restrictions. For instance, 1-2% of young children are estimated to be allergic to eggs. Significant population segments follow voluntary dietary restrictions, *e.g*., vegans and others may not eat eggs for religious or other reasons. In addition, the industrial scale production of eggs are associated with industrial farming of chickens, which incur high costs, such as, *e.g*., costs related to food health and safety restrictions for farmers, high transportation costs, and the cost of feeding and housing egg-laying birds. Furthermore, industrial chicken farming has a negative environmental impact, and raises a number of important humanitarian issues. Moreover, eggs have limited shelf life, and are at risk of harboring infectious pathogens, such as, for example, Salmonella, E. coli, and other pathogens which may endanger public health.

Many attempts have been made to create an egg substitute that recapitulates the desired features of natural eggs while minimizing the unwanted features of eggs. These attempts range from home-cooking based substitutes, *e.g*., mashed bananas and/or applesauce to replace eggs in baking, baking powder/baking soda mixtures to provide leavening, flour/water mixtures to provide binding and leavening. Commercially available substitutes include, for example, Eggbeaters^{™}, Ener-G^{™} egg substitute, Bob's Red Mill Egg Replacer^{™}. However, all of these substitutes have certain limitations. For example, many of the home-based egg substitutes provide only a single limited desired property of eggs in cooking, *e.g*., mashed fruit provide moisture and binding but not leavening, baking powder/soda and flour/water substitutes provide some leavening but limited binding properties. Eggbeaters^{™} is made from real egg whites, and is thus associated with low shelf life and risk of carrying pathogens, and is also avoided by vegans. Ener-G^{™} vegan egg substitute, acts as an imperfect substitute for many baking purposes because of its inferior binding qualities. Disclosed herein are compositions for use as a whole-egg substitute that addresses the limitations of the current art.

JPH11299435 (A) describes blends of pea protein and starch. www.gnpd.com/sinatra/recordpage/899314/from_search/CdbWuhC7cf/ describes mayonnaise made with pea protein and gums.

### SUMMARY OF THE INVENTION

The invention is defined by the appended claims.

Disclosed herein are multifunctional compositions that can be used as a whole egg substitute, driven by molecular gastronomy. In some disclosures, the compositions replace the whole egg or a part of the egg (e.g. the egg white or the yolk) in food products on a 1:1 basis by weight after reconstitution with water or other liquid, has a nutritional profile similar to eggs, and replicates one or more, if not all, of the egg's core functionalities. In some disclosures the whole egg is understood to include the contents of the egg as poured from the shell of the egg. In some disclosures, the core functionalities can be, but are not limited to achieving a desired crumb density, structure/texture, elasticity/springiness, coagulation, binding, mouthfeel, leavening, aeration/foaming, creaminess, and emulsification of the food product. The functionalities described above can overlap or may be interdependent. In some disclosures, the compositions can functionally replace the whole egg or a part of the egg in baked goods and/or emulsions. In some disclosures, the compositions replace whole eggs or a part of the egg on a 1:5 basis by weight, wherein 1 weight unit of the compositions replaces 5 weight units of eggs. In other disclosures, the compositions replaces whole eggs on a 10:1, 9:1, 8:1, 7:1, 6:1, 5:1, 4:1, 3:1, 2:1, or 1:1 basis by weight. In other disclosures the compositions replace whole eggs or a part of the egg on a 1:10, 1:9, 1:8, 1:7, 1:6, 1:5, 1:4, 1:3, 1:2, or 1:1 basis by weight.

In some disclosures, the compositions may be used to replace egg yolks. In other disclosures, the compositions may be used to replace egg whites. In some disclosures, the compositions may be used as an egg substitute in non-food products, *e.g*., shampoos. In some disclosures, the compositions may be used to replicate desired functions of eggs while overcoming the limitations of natural eggs, *e.g*., high saturated fat content, high cholesterol content, and allergenic properties. In yet other disclosures, the compositions may be used for functions other than as an egg substitute, *e.g*., water binding function.

In one disclosure, the composition comprises protein in an amount up to 80% by dry weight, and (ii) fat in amount from 5% to 15% by dry weight; wherein the composition is essentially egg-free, and wherein the composition provides binding, moisturizing, leavening, creaminess, and/or emulsifying properties similar to an egg.

In one disclosure, the compositions comprises 10-20% protein and 5-15% fat by dry weight, wherein the composition is essentially egg free and can be used to provide binding, moisturizing, leavening, and/or emulsifying properties similar to an egg. In some cases, the protein comprises plant-based protein. In more particular cases, the plant-based protein comprises protein from garbanzo, fava beans, yellow pea, sweet brown rice, rye, golden lentil, chana dal, soybean, sorghum, sprouted green lentil, du pung style lentil, and/or white lima bean. In some cases, the fat comprises plant-based oils. In more particular cases, the plant-based oils comprise oils from garbanzo, fava beans, yellow pea, sweet brown rice, rye, golden lentil, chana dal, soybean, sorghum, sprouted green lentil, du pung style lentil, and/or white lima bean.

In some cases, the composition comprises over 50% by dry weight of one or more flours, and less than 20% of a mixture of one or more gums and/or starches. In some cases, the composition comprises over 60% by dry weight of one or more flours, and less than 20% of a mixture of one or more gums and/or starches. In some cases, the composition additionally comprises 0-15% of a high fiber material. In some cases, the high fiber material comprises one or more brans. In a particular case, the one or more brans comprise micronized corn bran.

In another disclosure, the compositions comprise 60-99.5% of bean flour and 0.5-15% of a mixture of gums and/or starches by dry weight. In some cases, the bean flour comprises garbanzo flour. In some cases, the garbanzo flour comprises more than about 40%, more than about 75%, or more than about 85% of the dry weight of the composition. In more particular cases, the bean flour comprises fava bean flour. In some cases, the fava bean flour and garbanzo flour together comprise more than 80% of the dry weight of the composition. In some cases, the garbanzo flour comprises about 80-85% of the dry weight of the composition, and the fava bean flour comprises about 12.5-17.5% of the dry weight of the composition. In some cases, the garbanzo flour comprises about 45-55% of the dry weight of the composition, and the fava bean flour comprises about 35-45% of the dry weight of the composition. In some cases, the bean flour is essentially free of soy flour, or does not contain any soy flour.

In some cases, the one or more gums are selected from xanthan gum and acacia gum. In some particular cases, the composition comprises both xanthan gum and acacia gum. In more particular cases, the composition comprises roughly equal amounts of xanthan gum and acacia gum. In some particular cases, the xanthan gum and acacia gum each comprise about 1-3% of the dry weight of the composition.

In some particular cases, the one or more gums is xanthan gum only. In yet more particular cases, the xanthan gum comprises about 1-7.5% of the dry weight of the composition. In other particular cases, the one or more gums is acacia gum only.

In some cases, the composition comprising one or more gums additionally comprises one or more starches. In other cases, the one or more starches is arrowroot starch. In some particular cases, the gum comprises about 4-9% of the dry weight of the composition, and the arrowroot starch comprises about 2-5% of the dry weight of the composition.

In one disclosure, a composition is disclosed comprising (i) yellow pea flour, and (ii) modified starch; wherein the composition is essentially egg-free, and wherein the yellow pea flour and modified starch are in a weight ratio ranging from 7:3 to 3:7, and wherein the composition provides binding, moisturizing, leavening, and/or emulsifying properties similar to an egg. The flour and starch are in a weight ratio of 6:4 to 4:6, such as in a weight ratio of about 1:1. In various embodiments, the composition further comprises one or more components selected from the group consisting of guar gum, xanthan gum, carboxymethylcellulose, and mixtures thereof. For example, the composition may include the additional components in a combined amount weight ratio ranging from 1:8 to 1:12 compared to the amount by weight of the combined yellow pea flour and modified starch. The composition is an eggless mayonnaise.

In some disclosures the compositions can be used as a substitute for egg yolks, egg whites, or whole eggs in the preparation of an equivalent product prepared using an equivalent amount of eggs.

In some cases, the compositions are used as a binding agent. In some cases, the compositions are used as a moisturizing agent. In some cases, the compositions are used as an emulsifying agent. In some cases, the compositions are used as a leavening agent.

In some disclosures, there is provided a food product prepared using the compositions described herein, wherein the food product is indistinguishable from an equivalent product prepared using eggs. In some cases, the food product is a baked food product. In some cases, the food product is a sauce, dressing, or custard. In some cases, the food product is a scramble, omelet, or quiche indistinguishable from a scramble, omelet, or quiche prepared using eggs. In some cases, the food product is an ice cream, pasta, meatloaf, or burger patty. In some disclosures the food product is an emulsion, mayonnaise or dressings.

In some disclosures, there is provided a method of baking, using as a 1:1 replacement per egg an egg substitute, wherein the egg substitute comprises 10.3-13.0 grams garbanzo flour, 1.2-1.5 grams micronized corn bran, and 0.4-0.6 grams xanthan gum. In other disclosures, the disclosure provides a method of baking, using as a 1:1 replacement per egg an egg substitute, wherein the egg substitute comprises 9.8-12.3 grams garbanzo flour, 1.7-2.2 grams fava bean flour, 0.2-0.3 grams xanthan gum, and 0.2-0.3 grams acacia gum. In yet other disclosures, there is provided a method of baking, using as a 1:1 replacement per egg an egg substitute, wherein the egg substitute comprises, 6.1-7.8 grams garbanzo flour, 4.6-5.9 grams fava bean flour, 0.8-1.1 grams acacia gum, and 0.4-0.6 grams arrowroot starch. In some disclosures a method is disclosed for preparing an edible emulsion, comprising using as a 1:1 replacement per egg, 44-47% by weight yellow pea flour, 44-47% by weight modified starch, 3-5% by weight mixture of guar gum and xanthan gum, and 3-5% by weight carboxymethylcellulose.

In some disclosures, there is provided a method of making an emulsion such as mayonnaise, using as a 1:1 replacement per egg an egg substitute, wherein the egg substitute comprises 10.3-13.0 grams garbanzo flour, 1.2-1.5 grams micronized corn bran, and 0.4-0.6 grams xanthan gum, In other disclosures, there is provided a method of making an emulsion such as mayonnaise, using as a 1:1 replacement per egg an egg substitute, wherein the egg substitute comprises 9.8-12.3 grams garbanzo flour, 1.7-2.2 grams fava bean flour, 0.2-0.3 grams xanthan gum, and 0.2-0.3 grams acacia gum. In yet other disclosures, there is provided a method of making an emulsion such as mayonnaise, using as a 1:1 replacement per egg an egg substitute, wherein the egg substitute comprises, 6.1-7.8 grams garbanzo flour, 4.6-5.9 grams fava bean flour, 0.8-1.1 grams acacia gum, and 0.4-0.6 grams arrowroot starch.

### BRIEF DESCRIPTION OF THE FIGURES

Figure 1 provides a comparison of commercially available egg replacers versus eggs when measured for cake height.
Figure 2 provides a comparison of commercially available egg replacers versus eggs when measured for cake height/weight ratio.
Figure 3 provides a comparison of commercially available egg replacers versus eggs when measured for cake hardness.
Figure 4 provides a comparison of commercially available egg replacers versus eggs when measured for cake springiness.
Figure 5 provides a comparison of commercially available egg replacers versus eggs when measured for cake cohesiveness.
Figure 6 provides a comparison of commercially available egg replacers versus eggs when measured for cake gumminess.
Figure 7 provides a comparison of a comparitive composition versus eggs when measured for muffin hardness.
Figure 8 provides a comparison of a comparitive composition versus eggs when measured for muffin height.
Figure 9 provides a comparison of a comparitive composition versus eggs when measured for muffin cohesiveness.
Figure 10 provides a comparison of a comparitive composition versus eggs when measured for muffin springiness.
Figure 11 provides data from a Bostwick consistometer for the effect of prehydration time on consistency.
Figure 12 provides data on emulsion formation and emulsion stability. Starch was added to pea protein and the mixture was tested for its capacity to form a stable emulsion.
Figure 13 provides data on consistency on mayonnaise as measured with a Bostwick consistometer.
Figure 14 provides comparison of eggless mayo in particle size distribution.
Figure 15 provides a comparison of cold- and hot-milled flours with egg on height/leavening in muffins.
Figure 16 provides a comparison of cold- and hot-milled flours with egg on cohesiveness in muffins.
Figure 17 provides a comparison of cold- and hot-milled flours with egg on springiness in mu ffins.

### DETAILED DESCRIPTION OF THE INVENTION

Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details or with other methods.

The terminology and description used herein is for the purpose of describing particular embodiments only and is not intended to limit the invention. As used herein, the singular forms "a", "an" and "the" can be intended to include the plural forms as well, unless the context clearly indicates otherwise. The terms "including", "includes", "having", "has", "with", or variants thereof are intended to be inclusive in a manner similar to the term "comprising".

The term "about", "approximately", or "similar to" means within an acceptable error range for the particular value as determined by one of ordinary skill in the art, which can depend in part on how the value is measured or determined, or on the limitations of the measurement system. It should be understood that all ranges and quantities described below are approximations and are not intended to limit the invention. Where ranges and numbers are used these can be approximate to include statistical ranges or measurement errors or variation. In some embodiments, for instance, measurements could be plus or minus 10%.

The phrase "essentially free of" is used to indicate the indicated component, if present, is present in an amount that does not contribute, or contributes only in a de minimus fashion, to the properties of the composition. In various disclosures, where a composition is essentially free of a particular component, the component is present in less than a functional amount. In various disclosures, the component may be present in trace amounts. Particular limits will vary depending on the nature of the component, but may be, for example, selected from less than 10% by weight, less than 9% by weight, less than 8% by weight, less than 7% by weight, less than 6% by weight, less than 5% by weight, less than 4% by weight, less than 3% by weight, less than 2% by weight, less than 1% by weight, or less than 0.5% by weight.

By "indistinguishable" is meant that a comparison of two samples provides essentially the same outcome. Alternatively, by "indistinguishable" is meant that a comparison provides results that are within the error bars of the particular form of measurement. For example, if measured by consumer acceptance, two products would be indistinguishable if when compared by consumers, the products were approximately equally acceptable to a group of consumers.

### Functional Properties of the Compositions

Natural eggs have a number of useful properties that make them a useful component in a wide variety of food and non-food products. In some disclosures, the egg substitute will fulfill one or more qualities of natural eggs. In some disclosures, the compositions described herein will fulfill more than one quality of natural eggs. In more particular disclosures, the compositions disclosed herein will fulfill more than two, or more than three, or substantially most or all of the qualities of natural eggs. In various disclosures, binding, moisturizing, leavening, and/or emulsifying properties are determined to be similar to an egg if measured at between about 90-110% of the binding, moisturizing, leavening, and/or emulsifying properties of an egg.

### Viscosity

Natural eggs can provide a desired viscosity to batter or dough for the preparation of baked goods. Viscosity can be qualitatively assessed by the rate or ease of flow, the ease of movement during handling, or may be quantitatively assessed by viscometers or rheometers. In some disclosures, the compositions can provide a desired viscosity to the batter or dough similar to batter or dough prepared using natural eggs. In some disclosures, the compositions provide about 1-30%, about 20-50%, about 30-70%, about 40-90%, about 60-100% of the desired viscosity of a natural egg. In some disclosures, the compositions provide more than about 1%, about 2%, about 3%, about 4%, about 5%, about 10%, about 15%, about 20%, about 30%, about 40%, about 50%, about 60%, about 70%, about 80%, about 90%, about 100% of the desired viscosity of a natural egg. In some disclosures the viscosity is in a raw product. In some disclosures the viscosity is in a cooked product. In some disclosures the viscosity is in a chemically crosslinked product. In some particular disclosures, the compositions provide more than about 50% of the desired viscosity of a natural egg. In some other particular disclosures, the compositions provide more than about 75% of the desired viscosity of a natural egg. In yet other particular disclosures, the compositions provide more than about 90% of the desired viscosity of a natural egg. In some disclosures, the compositions may not provide desired viscosity.

### pH

Natural eggs can have a pH range of about 6-8, although the pH of eggs can vary widely with freshness or other environmental factors. In some disclosures, the pH of the compositions provided herein can be similar to that of natural eggs. In some disclosures, the pH of the reconstituted compositions can be about 5.5-8.5, about 6-8, about 6.5-7.5, or about 7. In some disclosures, the pH of the compositions provided herein is different than natural eggs, e.g. more acidic or more basic than a natural egg composition. For example a composition provided herein can have, in some disclosures, a pH of less than 5.5, 5, 4.5, or less than 4. In other disclosures a composition provided herein can have a pH of greater than 6.5, 7, 7.5, or greater than 8.

### Binding Properties

Natural eggs provide binding properties that are useful in many cooking and non-cooking applications. Binding properties can refer to the properties of natural eggs that provide structural integrity to egg-containing or egg-substitute containing products, *e.g*., baked goods. Structural integrity of an egg-containing or egg-substitute containing product may be compared and/or indicated by, for example, whether the product falls apart during or after preparation, or by the quantity of fragments or crumbs that are generated when the product is handled. In some disclosures, the compositions provide binding properties of natural eggs. In some disclosures, the compositions provide about 1-30%, about 20-50%, about 30-70%, about 40-90%, about 60-100% of the binding properties of a natural egg. In some disclosures, the compositions provide more than about 1%, about 2%, about 3%, about 4%, about 5%, about 10%, about 15%, about 20%, about 30%, about 40%, about 50%, about 60%, about 70%, about 80%, about 90%, about 100% of the binding properties of a natural egg. In some particular disclosures, the compositions provide more than about 50% of the binding properties of a natural egg. In some other particular disclosures, the compositions provide more than about 75% of the binding properties of a natural egg. In yet other particular disclosures, the compositions provide more than about 90% of the binding properties of a natural egg. In some disclosures, the compositions may not provide binding properties.

### Thickening agents

Eggs are commonly used as thickening agents for a number of food products, for example, sauces, custards, fillings, etc. Thickening can be caused by the physical interference of water molecules in the food product with molecules from the thickening product. Thickening properties of an egg-substitute product may be indicated by the ability to thicken the egg-substitute containing product to the desired amount in a smooth, consistent manner, while minimizing the formation of lumps. In some disclosures, the compositions can provide thickening properties. In some disclosures, the compositions can provide about 1-30%, about 20-50%, about 30-70%, about 40-90%, about 60-100% of the thickening properties of a natural egg. In some disclosures, the compositions provide more than about 1%, about 2%, about 3%, about 4%, about 5%, about 10%, about 15%, about 20%, about 30%, about 40%, about 50%, about 60%, about 70%, about 80%, about 90%, about 100% of the thickening properties of a natural egg. In some disclosures, the compositions provide more than about 50% of the thickening properties of a natural egg. In particular disclosures, the compositions provide more than about 75% of the thickening properties of a natural egg. In yet more particular disclosures, the compositions provide more than about 90% of the thickening properties of a natural egg. In some dislosures, the compositions may not provide thickening properties.

### Leavening agents

Eggs provide leavening properties that are useful in a number of cooking and non-cooking applications. A leavening agent can have foaming action that introduces air bubbles into the product, and can be used to provide height, lightening, and fluffiness of the finished product. For example, eggs are commonly used in cake, bread, muffin, soufflé, and other recipes to impart a fluffy texture to the final product. Leavening properties of an egg or egg-substitute may be indicated by the height and texture of the final product. For example, a light, airy texture indicates superior leavening compared to a heavy, gummy texture. In some disclosures, the compositions can provide leavening properties similar to that of natural eggs. In some disclosures, the compositions provide about 1-30%, about 20-50%, about 30-70%, about 40-90%, about 60-100% of the leavening properties of a natural egg. In some disclosures, the compositions provide more than about 1%, about 2%, about 3%, about 4%, about 5%, about 10%, about 15%, about 20%, about 30%, about 40%, about 50%, about 60%, about 70%, about 80%, about 90%, about 100% of the leavening properties of a natural egg. In some disclosures, the compositions provide more than about 50% of the leavening properties of a natural egg. In particular disclosures, the compositions provide more than about 75% of the leavening properties of a natural egg. In yet more particular disclosures, the compositions provide more than about 90% of the leavening properties of a natural egg. In some disclosures, the compositions do not provide leavening properties.

### Emulsifying properties

The emulsifying properties of natural eggs are useful in the preparation of food products which require the mixing and integration of substances that are immiscible, such as oil and water. Many products for human consumption are oil-in-water emulsions, including but not limited to hollandaise sauces and mayonnaise. In oil-in-water emulsions, oil droplets are dispersed evenly throughout an aqueous phase. However, oil droplets will tend to coalesce over time. An emulsifying agent can prevent the coalescence of the oil droplets, resulting in a smooth, creamy mixture. The emulsifying properties of the present compositions may be determined by the texture, consistency, and stability of the finished product, *e.g*., a sauce. For example, a sauce that remains smooth indicates a superior emulsion compared to a sauce that has undergone partial or complete separation over time. In some disclosures, the compositions can provide emulsifying properties. In some disclosures, the compositions provide about 1-30%, about 20-50%, about 30-70%, about 40-90%, about 60-100% of the emulsifying properties of a natural egg. In some disclosures, the compositions provide more than about 1%, about 2%, about 3%, about 4%, about 5%, about 10%, about 15%, about 20%, about 30%, about 40%, about 50%, about 60%, about 70%, about 80%, about 90%, about 100% of the emulsifying properties of a natural egg. In some disclosures, the compositions provide more than about 50% of the emulsifying properties of a natural egg. In particular disclosures, the compositions provide more than about 75% of the emulsifying properties of a natural egg. In yet more particular embodiments, the compositions provide more than about 90% of the emulsifying properties of a natural egg. In some disclosures, the compositions do not provide emulsifying properties.

### Texture

Eggs are commonly used to provide moisture and fat to a product recipe, resulting in a non-dry texture. The ability of an egg or egg substitute to provide the desired moisture and fat to a product recipe (such as, for example, cake or bread recipes) may be indicated by the texture of the finished product, *e.g*., whether the product produces a moist or dry crumb. In some disclosures, the compositions provide a moisture imparting quality. In some disclosures, the compositions provide about 1-30%, about 20-50%, about 30-70%, about 40-90%, about 60-100% of the desired moisture and fat of a natural egg. In some disclosures, the compositions provide more than about 1%, about 2%, about 3%, about 4%, about 5%, about 10%, about 15%, about 20%, about 30%, about 40%, about 50%, about 60%, about 70%, about 80%, about 90%, about 100% of the desired moisture and fat of a natural egg. In some disclosures, the compositions provide more than about 50% of the desired moisture and fat of a natural egg. In particular disclosures, the compositions provide more than about 75% of the desired moisture and fat of a natural egg. In yet more particular disclosures, the compositions provide more than about 90% of the desired moisture and fat of a natural egg. In some disclosures, the compositions do not provide moisture and fat.

### Color

Eggs can sometimes be used to provide a certain color to the food or non-food product. In some disclosures, the compositions can provide the same or similar color to the product. In other disclosures, the compositions do not provide similar color to that of natural eggs. In some disclosures, the compositions can be color neutral and may not affect the color of the product.

### Flavor

Eggs can be sometimes used to provide a certain eggy taste to the food product. Taste may be qualitatively assessed by blind taste test of the product prepared using the compositions compared to the product prepared using an equivalent amount of eggs. In some disclosures, the compositions can provide the same or a similar eggy taste to the product. In other disclosures, the compositions do not provide an eggy taste to the product. In some disclosures, the compositions can be taste-neutral.

### Egg Replacement

In some disclosures, the compositions can be used as a replacement for whole eggs, egg yolks, or egg whites in food products. In some disclosures, the food products can be baked goods such as but not limited to muffins, cakes, cupcakes, brownies, cookies, biscotti, pancakes, breads, waffles, pastries, pies, tarts, scones, pretzels, crackers. In some disclosures, the compositions can be used as a replacement for eggs or egg parts in other products such as but not limited to pasta, noodles, meatloaf, burgers, custards, sauces, ice cream, mayonnaise, and/or salad dressings.

In some disclosures, the compositions can be used as a replacement for whole eggs, egg yolks, or egg whites in non-food products, such as but not limited to shampoos, facial washes or masks, creams, films, encapsulates. In other disclosures, the compositions can be used for functions other than as an egg substitute.

### Subjective Properties of the Compositions

Mouthfeel is a concept used in the testing and description of food products. Products made using the compositions of the invention can be assessed for mouthfeel. In some disclosures products, e.g baked goods, made using compositions of the invention have mouthfeel that is similar to products made with natural eggs. In some disclosures the mouthfeel of the compositions of the invention is superior to the mouthfeel of previously known or attempted egg substitutes, e.g bananas, modified way proteins, or Egg BeatersTM.

Examples of properties which may be included in a measure of mouthfeel include: Cohesiveness: Degree to which the sample deforms before rupturing when biting with molars; Density: Compactness of cross section of the sample after biting completely through with the molars; Dryness: Degree to which the sample feels dry in the mouth; Fracturability: Force with which the sample crumbles, cracks or shatters. Fracturability encompasses crumbliness, crispiness, crunchiness and brittleness; Graininess: Degree to which a sample contains small grainy particles, may be seen as the opposite of smoothness; Gumminess: Energy required to disintegrate a semi-solid food to a state ready for swallowing; Hardness: Force required to deform the product to given distance, i.e., force to compress between molars, bite through with incisors, compress between tongue and palate; Heaviness: Weight of product perceived when first placed on tongue; Moisture absorption: Amount of saliva absorbed by product; Moisture release: Amount of wetness/juiciness released from sample; Mouthcoating: Type and degree of coating in the mouth after mastication (for example, fat/oil); Roughness: Degree of abrasiveness of product's surface perceived by the tongue; Slipperiness: Degree to which the product slides over the tongue; Smoothness: Absence of any particles, lumps, bumps, etc., in the product; Uniformity: Degree to which the sample is even throughout; homogeneity; Uniformity of Bite: Evenness of force through bite; Uniformity of Chew: Degree to which the chewing characteristics of the product are even throughout mastication; Viscosity: Force required to draw a liquid from a spoon over the tongue; and Wetness: Amount of moisture perceived on product's surface.

### Compositions

### Protein

Natural eggs typically comprise about 5-15% protein content by weight. The high protein content of natural eggs play a central role in providing the desired binding properties of the eggs. In some disclosures, the compositions provided herein comprise proteins, polypeptides, and/or peptides, referred to collectively as "protein". In some embodiments, the compositions can comprise about 1%, about 2%, about 3%, about 4%, about 5%, about 7.5%, about 10%, about 15%, about 20%, about 25%, about 30% protein by dry weight or total weight. In some disclosures, the compositions can comprise about 1-5%, about 2-10%, about 5-20%, or about 10-30% protein by dry weight or total weight. In particular disclosures, the compositions can comprise about 10-15% protein by dry weight or total weight.

In some disclosures, the proteins in the composition can comprise one or more plant-based proteins. In some disclosures, the one or more plant-based proteins may include, but are not limited to: pea proteins, isolates, and/or concentrates; garbanzo (chickpea) proteins, isolates, and/or concentrates; fava bean proteins, isolates, and/or concentrates; soy proteins, isolates, and/or concentrates; rice proteins, isolates, and/or concentrate; potato proteins, isolates, and/or concentrates; hemp proteins, isolates, and/or concentrates; or any combinations thereof. Plant-based proteins may include, for example, soy protein (e.g., all forms including concentrate and isolate), pea protein (e.g., all forms including concentrate and isolate), canola protein (e.g., all forms including concentrate and isolate), other plant proteins that commercially are wheat and fractionated wheat proteins, corn and it fractions including zein, rice, oat, potato, peanut, green pea powder, green bean powder, and any proteins derived from beans, lentils, and pulses. In other disclosures, the pea proteins can be derived from green peas or yellow peas. In particular disclosures, the pea proteins can be derived from yellow peas, such as Canadian yellow peas.

In some disclosures, proteins in the composition can comprise undenatured proteins. In other disclosures, proteins in the composition can comprise denatured proteins. In some disclosures essentially no animal proteins are used in the compositions.

### Enzymes

Natural eggs contain a number of enzymes that are used in human products. For example, lysozyme, which may be extracted from egg whites, can be used in eye drop formulations or as a cheese preservative. In some disclosures, the compositions comprise an enzyme profile similar to that of eggs. In some disclosures, the compositions comprise an enzyme profile dissimilar to that of natural eggs. In some disclosures, the compositions comprise lysozyme. In some disclosures, the compositions do not comprise lysozyme. In some disclosures the compositions provided herein contain enzymes that replicate the function of the natural egg enzymes. For example a natural egg enzyme may catalyze a particular known chemical reaction. Compounds disclosed herein can contain enzymes that catalyze the same or a similar reaction.

### Oil/Fat

Natural chicken eggs typically comprise about 11% oil/fat content by weight. The fat content of natural eggs provides some of the desired moisture and texture to the egg-containing product, thus improving texture of the product. In some disclosures, the compositions can provide a similar fat profile to that of natural eggs. In other disclosures, the compositions can provide a lower fat profile to that of natural eggs while still imparting a desired moisture and texture to the product similar to an equivalent product prepared using natural eggs. In some disclosures, the compositions can comprise about 0.1%, about 0.2%, about 0.5%, about 1%, about 2%, about 3%, about 4%, about 5%, about 7.5%, about 10%, about 15%, about 20%, about 25%, about 30% fat by dry weight or total weight. In some disclosures, the compositions can comprise about 0.1-10%, about 0.5-15%, about 1-20%, or about 5-30% fat by total weight. In particular disclosures, the compositions can comprise about 1-10% fat by total weight. Natural eggs comprise about 3.1% saturated fats. The high saturated fat content of eggs may deter significant numbers of consumers from enjoying eggs or egg-containing products. In some disclosures, the compositions can comprise less than 3%, less than 2%, less than 1%, less than 0.5%, less than 0.1%, or essentially no saturated fat. In some disclosures, the fat content of the compositions can comprise plant-based oils. In some disclosures, the plant-based oils can comprise canola oil, sunflower oil, safflower oil, coconut oil, corn oil, olive oil, peanut oil, or palm oil. In some disclosures, the plant-based oils can comprise oils from beans (e.g garbanzo beans or fava beans).

In some disclosures, the compositions are esssetitially free of fat and/or oil, such as animal fats or animal oils. In some disclosures, the compositions do not comprise fat. In some disclosures, the compositions do not comprise oil. In some disclosures the compositions do not comprise any animal oils or fats. In some disclosures the compositions comprise less than 3%, less than 2%, less than 1%, less than 0.5%, or less than 0.1% plant fats or oils. In some disclosures the compositions comprise less than comprise less than 3%, less than 2%, less than 1%, less than 0.5%, or less than 0.1% animal fats or oils.

### Nutrients

Eggs are also highly valued for their vitamin and nutrient content. In particular, eggs are a natural source of vitamins A, E, D, and other vitamins and nutrients, providing about 540 IU vitamin A, 1.050 mg vitamin E, and 47 IU vitamin D per 100 g total weight. In some disclosures, the compositions provide a vitamin profile similar to that of eggs by equivalent weight. In some disclosures, the compositions can be fortified with vitamins to provide a high nutritional value per unit weight compared to natural eggs. In some disclosures, the compositions do not provide a vitamin profile similar to eggs. In some disclosures the nutritional profile of the compositions of the invention is superior to natural eggs.

In addition, eggs are a source of choline, a nutrient that supports healthy brain development. In some disclosures, the compositions provide similar amounts of choline as compared to an equivalent weight of eggs. In some disclosures, the compositions may be fortified with choline to provide a higher nutritional value per unit weight compared to natural eggs. In some disclosures, the compositions do not provide similar amounts of choline as an equivalent weight of natural eggs.

### Nucleic Acids

Eggs will contain nucleic acids from the species that laid the egg. So a bird egg will contain DNA from a bird and a reptile egg will contain DNA from a reptile. As the compositions are not derived from these species the compositions will not normally contain DNA normally associated with an egg. Therefore in some disclosures the compositions contain no nucleic acids from a bird, a reptile, an amphibian, or a fish. It is possible that for a variety of reasons one would wish to add the egg related nucleic acids to the compositions described herein. This would result in a product that contained an artificially added nucleic acid. In some disclosures the compositions contain no artificially added nucleic acids typically associated with an egg.

### Flours

In some disclosures, the composition can comprise one or more flours. In some cases, flour is a powder ground from grains, seeds, roots, or other sources. Most flours have a high starch content which imparts thickening and binding properties, and may provide moisture content. In some disclosures, the one or more flours are selected from all-purpose flour, unbleached flour, bleached flour, bread flour, self-rising flour, wheat flour, cake flour, acorn flour, almond flour, amaranth flour, atta flour, rice flour, buckwheat flour, cassava flour, chestnut flour, chuño flour, coconut flour, corn (maize) flour, hemp flour, maida flour, mesquite flour, nut flour, peanut flour, potato flour, rice flour, rye flour, tapioca flour, t'eff flour, soy flour, peanut flour, arrowroot flour, taro flour, acorn flour, bean flours such as, *e.g*., soy flour, garbanzo flour, fava bean flour, pea flour; or other flour. In some disclosures, the one or more flours are selected from Sorghum, White sorghum, Soy bean, Millet, Vallarta, Stueben, Green fagelot, Black beluga, Black calypso, Chana dal, Amaranth, Lentil, Red lentil, Black lentil, Golden lentil, Do pung-style lentil, Sprouted green lentil, Sweet brown rice, Navy bean. Red bean, Pink bean, Canellini bean, Giant white lima bean, Christmas lime bean. Baby lima bean, Mung bean, Peeled fava bean, Good mother stellard bean, Cranberry chorlottis bean,Santa maria pinguinto bean, Brown tepary bean, Black turtle bean, Yellow slit pea, Canadian yellow pea, Black turtle beans, Brown teff flour,Rye flour, Quinoa flour. Potato flour. White rice flour, Brown rice flour, Oat flour. Buckwheat flour, Whole grain corn flour, Stone ground cornmeal, Pre-cooked split pea, Pre-cooked garbanzo flour, Arrowroot powder, and Potato starch. In some disclosures, the composition can comprise about 10%, about 20%, about 30%, about 40%, about 50%, about 60%, about 70%, about 80%, about 85% about 90%, about 95%, about 100% flour. In some disclosures, the composition can comprise about 1-30%, about 10-40%, about 30-70%, about 50-99%, about 60-95%, about 70-90% total flour by dry weight. In some disclosures, the flour is cold-milled.

Flours can differ widely in their protein content, containing as low as 5% to as high as 30% protein. Natural chicken eggs typically comprise about 10-15% protein content by weight. The high protein content of natural eggs play a central role in providing the desired binding properties of the eggs. Furthermore, flours can differ widely in their fat content, containing as low as 0.1% to as high as 15% fat content. The fat content of natural eggs provides some of the desired moisture and fat to the egg-containing product, thus improving texture of the product. However, the high saturated fat content of eggs may deter significant numbers of consumers from enjoying the product.

Therefore, in some disclosures, the one or more flours are selected from flours with high protein content and a fat content similar to that of natural eggs, wherein the fat content is provided essentially by unsaturated fats. In some disclosures, the one or more flours may comprise garbanzo/chickpea flour, fava bean flour, soy flour, nut flours. A significant number of potential consumers may have nut allergies, therefore, in particular disclosures, the one or more flours comprise garbanzo and/or fava bean flours. In some disclosures, the composition may comprise about 10%, about 20%, about 30%, about 40%, about 50%, about 60%, about 70%, about 80%, about 85% about 90%, about 95%, about 100% garbanzo flour. In some disclosures, the composition may comprise about 20-40%, about 40-60%, about 45-55% garbanzo flour. In other disclosures, the compositions may comprise about 50-100%, about 60-95%, about 70-90%, about 80-85% garbanzo flour. In a particular disclosure, the composition can contain about 86.46% garbanzo flour. In another particular disclosure, the composition can contain about 82% garbanzo flour. In yet another particular disclosure, the composition can contain 50.85% garbanzo flour.

In some disclosures, the composition can comprise fava bean flour. In some disclosures, the composition may comprise about 10%, about 20%, about 30%, about 40%, about 50%, about 60%, about 70%, about 80%, about 85% about 90%, about 95%, about 100% fava bean flour. In some disclosures, the composition may comprise about 1-30%, about 10-40%, or about 40-60% fava bean flour.

In some disclosures, the composition comprising garbanzo flour can also comprise fava bean flour. In some disclosures, the composition comprising garbanzo flour can also comprise about 0.5-60%, about 5-50%, about 10-45% fava bean flour. In a particular disclosure, the composition comprising garbanzo flour can also comprise about 14.46% fava bean flour. In yet another particular disclosure, the composition comprising garbanzo flour can also comprise about 38.98% fava bean flour.

In some disclosures, the garbanzo and fava bean flours together can comprise about 50-99.5% of the weight of the composition. In some disclosures, the garbanzo and fava bean flours together can comprise about 70-99%, or about 80-99% of the weight of the composition. In a particular disclosure, the garbanzo and fava bean flours together can comprise about 96.46% of the weight of the composition. In another disclosure, the garbanzo flour can comprises about 82% of the weight of the composition, and the fava bean flour can comprise 14.46% of the weight of the composition. In yet another disclosure, the garbanzo and fava bean flours together can comprise 89.83% of the weight of the composition. In yet another particular disclosure, the garbanzo flour can comprises 50.85% of the weight of the composition, and the fava bean flour can comprise 38.98% of the weight of the composition.

### Gums

In some disclosures, the composition may also comprise one or more gums, such as, *e.g.,* xanthan gum, acacia gum, gellan gum, guar gum, locust bean gum, tragacanth gum, carrageenan gum, or a combination thereof, for example. "Gums" refers to materials that act as gelling agents, often comprising polysaccharides and/or glycoproteins. Gums, such as xanthan gum, can be used in small amounts to provide significant thickening and viscosity, and can also be used to replace fat and emulsifiers. In some disclosures, the one or more gums comprise about 0.5%, 1%, 2%, 3%, 4%, 5%, 6%, 7%, 8%, 9%, 10%, 12.5%, 15%, or 20% of the dry weight or total weight of the composition. In some disclosures, gums can comprise about 0.5-20%, about 1-15%, or about 2-10% of the dry weight or total weight of the composition. In particular disclosures, gums can comprise about 1-5% of the dry weight or total weight of the composition. In some disclosures, the composition can comprise xanthan gum, acacia gum, or a combination of the two. In some disclosures, gums can comprise about 0.5-20% of the total weight of the composition.

In some particular disclosures, the composition can comprise a single gum only. In some disclosures, the single gum can be xanthan gum. In particular disclosures, the composition can comprise about 1-10% of the single gum xanthan gum. In another particular disclosure, the composition can comprise 3.54% xanthan gum.

In other disclosures, the single gum can be acacia gum. In some disclosures, the composition can comprise about 1-10% of the single gum acacia gum. In a particular disclosure, the composition can comprise 6.78% acacia gum.

In other disclosures, the composition can comprise both xanthan gum and acacia gum. In some disclosures, the composition can comprise about 1-4% xanthan gum and about 1-4% acacia gum. In yet another disclosure, the composition can comprise 1.77% xanthan gum and 1.77 acacia gum.

In some disclosures, the composition can comprise one or more starches, such as, for example, arrowroot starch, cornstarch, tapioca starch, mung bean starch, potato starch, sweet potato starch, rice starch, sago starch, wheat starch. The term "starch" refers to polysaccharide materials, often produced by plants to act as energy stores. Starches can be used to impart thickening and stabilizing properties. In some disclosures, the one or more starches can comprise about 0.5%, 1%, 2%, 3%, 4%, 5%, 6%, 7%, 8%, 9%, 10%, 12.5%, 15%, or 20% of the dry weight or total weight of the composition. In some disclosures, the one or more starches can comprise about 0.5-20%, about 1-15%, or about 2-10% of the dry weight or total weight of the composition. In some disclosures, the composition can comprise a combination of gums and starches. In some disclosures, the composition can comprise both acacia gum and arrowroot starch. In some particular disclosures, the acacia gum and arrowroot starch together can comprise about 2-20% of the total weight of the composition. In other disclosures, the acacia gum and arrowroot starch together can comprise about 5-15% of the total weight of the composition. In yet another disclosure, the acacia gum and arrowroot starch together can comprise about 10% of the total weight of the composition. In a particular disclosure, the composition can comprise 6.78% acacia gum and 3.39% arrowroot starch.

In various disclosures, the starch may be modified starch. Suitable starches include, but are not limited to, pregelatinized starch (e.g., corn, wheat, tapioca), pregelatinized high amylose content starch, pregelatinized hydrolyzed starches (e.g., maltodextrins, corn syrup solids), chemically modified starches such as pregelatinized substituted starches (e.g., octenyl succinate modified starches), as well as mixtures of these starches. In various disclosures, the modified starch is a cold-water soluble modified starch derived from waxy maize. In various disclosures, the starch is sodium octenylsuccinate starch. Modified starches may be available commercially.

Mixes of guar gum and xanthan gum may be obtained in a commercial product, for example as Pre-Hydrated Stabilizer XC-8444, available from TIC Gums. Carboxymethylcellulose may be obtained as a commercial product, for example, Pre-Hydrated^{®} Ticalose^{®} CMC 2500 Powder available from TIC gums.

### High-Fiber Content

In some disclosures, the composition can also comprise a material with high-fiber content. In some disclosures, fiber in the composition can provide a high water-holding capacity that contributes to the overall texture of the final food product. In some disclosures the high fiber material can be bran, *e.g.,* a wheat bran, oat bran, corn bran, rice bran, or other bran. In some disclosures, the bran can be micronized into a fine powder. In some disclosures, micronizing the bran prevents the introduction of a grainy texture to the final food product. In some disclosures, the micronized bran can be micronized corn bran. In some embodiments, the high fiber material can comprise about 0.5%, 1%, 2%, 3%, 4%, 5%, 6%, 7%, 8%, 9%, 10%, 12.5%, 15%, 20%, 30%, 40%, 50% of the dry weight or total weight of the composition. In some disclosures, the high fiber material can comprise about 0.5-50%, about 1-30%, or about 2-20% of the dry weight or total weight of the composition. In other disclosures, the composition does not comprise a high fiber material.

### Lecithin

In some disclosures, the compositions can comprise lecithin. Lecithins are yellow brownish fatty substances that are present in animal and plant tissues, as well as egg yolk. Lecithin serves as an emulsifier, and has a similar fat profile to that of eggs. Lecithins are also non-allergenic. In some disclosures, the lecithins can comprise plant-based lecithins. In some disclosures, the lecithins can comprise garbanzo lecithin, fava bean lecithin, soy lecithin, sunflower lecithin, canola lecithin, or a combination thereof. In some disclosures, the compositions can comprise about 0.01%-25%, about 0.1%-20%, about 1-25%, about 0.01%-10%, or about 4% of lecithin by dry weight or total weight of the composition. In some disclosures, the composition may not comprise lecithins.

### Gypsum

In some disclosures, the compositions can comprise gypsum (calcium sulfate). Gypsum can advantageously provide coagulation and can have thickening properties as well. In some cases, the gypsum can be Terra Alba (calcium sulfate dihydrate). In some disclosures the compositions can include, for example, between about 0.5%-20%, between about 1% - 15%, between about 0.5% -12%, or between about 0.5% - 2% by dry weight or total weight of gypsum. In some disclosures, the compositions may not comprise gypsum.

### Magnesium Chloride and Papain

In some disclosures, the compositions can comprise magnesium chloride (Nigari) and/or papain (Papaya enzyme). In some disclosures, the composition can comprise, for example, between about 0.5% and about 20%, between about 1% and about 15%, or between about 0.5% and about 12% by dry weight or total weight of magnesium chloride and/or papain. In some disclosures, the composition does not comprise magnesium chloride or papain.

### Bases and Acids

In some disclosures, the composition can comprise one or more bases, *e.g.,* potassium carbonate or calcium carbonate. In some disclosures the composition can comprise one or more acids, *e.g.,* citric acid. The one or more acids and/or bases can be utilized to modify the pH of the composition. The composition can comprise between about 0.5% and about 30%, between about 0.5% and about 15%, or between about 0.5% and about 5% by total weight by dry weight or total weight of acids and/or bases. In some cases, the composition does not comprise acids or bases.

In some disclosures, the compositions can comprise sodium bicarbonate (baking soda), baking powder, calcium lactate (including a calcium lactate not derived from dairy), calcium carbonate, or Versawhip 6000 (enzyme-altered soy protein, can replace a part or all of the percentage of the protein). In some disclosures, these agents may be utilized as additional leavening agents in the composition. In some disclosures , the compositions can comprise about 1% -20%, or about 2- 12% by dry weight or by total weight of the above leaveners. In some disclosures, the compositions do not comprise sodium bicarbonate, baking powder, calcium lactate, calcium carbonate, or Versawhip 6000.

### Coloring Agents

In some disclosures, the compositions can comprise one or more coloring agents. Various natural or artificial coloring agents are known to those skilled in the art, and can include, for example, caretonoids such as beta-carotene, turmeric, annatto, mango yellow, or palm-based oils. In some disclosures, the compositions can comprise about 0.1%-20%, or between about 0.5%-15% by dry weight or by total weight of a coloring agent. In some disclosures, the compositions may not comprise a coloring agent.

### Flavoring Agents

In some disclosures, the compositions can comprise one or more flavoring agents. Various natural or artificial flavoring agents are known to those skilled in the art, and can include, for example, salt, spices, sugar, sweeteners, monosodium glutamate, sulfuric flavoring agents such as black salt, or other flavoring agents.

### Methods of Making and Storing the Compositions

In some disclosures, the compositions can be prepared by dry blending. In some disclosures, the compositions can be processed using an inline high-shear mixer, cell disruption, liquid chromatography, including HPLC, sonication, and/or rotor-stator mixing technology. In some disclosures, the mixer can have a pump capability of at least about 500 gallons/minute, with a throughput of 50 gallons/minute. In some disclosures, the sonicator can have a throughput of at or above 5 gallons/minute. In other disclosures, the compositions can be prepared using standard home kitchen materials, *e.g.,* a kitchen scale, mixing bowl, utensils, blender, or food processor. In some disclosures, the compositions can be stored as a dry material.

### Storage and shelf life

Eggs and products made from eggs have a limited shelf-life. Raw eggs in the shells should only be stored with refrigeration for up to 5 weeks. When the yolk or the white are removed from the shell the storage life with refrigeration drops to only a maximum of 4 days. Commercially available non-sterile liquid egg substitutes also have a limited shelf life of up to about 7 days in the refrigerator. Similarly foods cooked with eggs have a limited storage life. A pie or a quiche cooked with eggs should only be stored for less than a week with refrigeration. Compositions disclosed herein can provide significant gains in shelf-life, for both the egg substitute and for products produced using the egg substitute.

Compositions disclosed herein can, in some disclosures, be stable in storage at room temperature for up to 1, 2, 3, 4, 5, 6, 7, 8, 9, or 10 weeks. In some disclosures compositions (are stable for storage at room temperature for months, e.g. greater than 1, 2, 3, 4, 5, 6, 7, 8, 9, 10, 11, 12, or 13 months. In some disclosures compositions are stable for refrigerated or freezer storage for months, e.g. greater than 1, 2, 3, 4, 5, 6, 7, 8, 9, 10, 11, 12, or 13 months. In some disclosures compositions are stable for refrigerated or freezer storage for years, e.g. greater than 1, 2, 3, 4, 5, 6, 7, 8, 9, 10, 11, 12, or 13 years. In some disclosures products produced using compositions disclosed herein are stable for storage at room temperature for months, e.g. greater than 1, 2, 3, 4, 5, 6, 7, 8, 9, 10, 11, 12, or 13 months. In some disclosures products produced using compositions disclosed herein are stable for storage at room temperature for years, e.g. greater than 1, 2, 3, 4, 5, 6, 7, 8, 9, 10, 11, 12, or 13 years.

In some disclosures, storage as a dry material can increase the shelf-life of the composition. In some disclosures the compositions are stored as a dry material for later reconstitution with a liquid, e.g. water.

### Reconstituting from a Dry Composition

In some disclosures the compositions are reconstituted with a liquid, e.g. water, milk, or other liquid suitable for human consumption. In one example 36-45 grams of liquid can be added to 12-15 grams dry weight of the composition to produce a substitute for 1 whole egg. The amount of liquid can be varied to suit a particular purpose for the reconstituted composition.

In some disclosures, the compositions, prior to the addition of water, could be first subjected to a sonicator, and the water content then added via a higher throughput method such as the inline high-shear mixer or rotor-stator mixer. Ability to apply intense shear and shorten mixing cycles can be desirable in creating desirable emulsions, or agglomerated powders -- to be dispersed into a liquid medium. In some disclosures, the inline mixer is positioned in a flowing stream, the mixing process can be more tightly controlled than in a batch configuration, ensuring that the number of passes through the high-shear zone can be monitored with greater confidence. In some disclosures, solid and liquid additions can also be injected into the flow and dispersed with reproducible results.

Pre-hydrating the protein (e.g. incubating the flour with water for 24 hours) can in some disclosures improve the properties of the composition. Accordingly, in some disclosures a dry composition is prehydrated for several hours or days, e.g. 1, 2, 3, 4, 5, 6, 7. 8, 9, 10, 11, or 12 hours or 1,2, or 3 days. In one disclosure prehydrating the composition gives a thicker and stronger emulsion when the composition is used in food preparation.

### Heating

Heat can be used to prepare the compositions of the invention. Heat can aid in reconstituting the compositions in a liquid. Heat can also serve to denature proteins of the compositions. However, in some disclosures heat is not necessary for preparing the compositions. Therefore in some disclosure the compositions are prepared by heating one or more components of the composition to a temperature of at least 60, 70, 80, 90, or 100 degrees Celsius. In some disclosures the components of the composition are heated to a temperature range of about between 60 and 80 or 85 degrees Celsius. In some disclosures the range is about between 59 and 81 or 86 degrees Celsius. In some disclosures the components of the composition are heated to less than 60 degrees Celsius or to more than 85 degrees Celsius. In some disclosures the heated composition is held at the elevated temperature for 1 - 10 minutes for 10 - 20 minutes. In some disclosures the heated compositions are held at the elevated temperature for less than 1 minute. In some disclosures the components of the composition are not heated for preparation of the composition.

### Food Products

Described herein is a food product prepared using the compositions described herein, wherein the food product is indistinguishable from an equivalent product prepared using eggs. In some cases, the food product is a baked food product. Such baked food products include cookies, brownies, cake, and the like. In some cases, the food product is a sauce, dressing, or custard. In some cases, the food product is a scramble, omelet, or quiche indistinguishable from a scramble, omelet, or quiche prepared using eggs. In some cases, the food product is an ice cream, pasta, meatloaf, or burger patty. In some disclosures the food product is an emulsion, such as mayonnaise or dressings.

### EXAMPLES

The examples do not describe compositions of the invention.

### Example 1

One non-limiting composition is described below (by weight percentage).

| | |
|---|---|
| Garbanzo Flour | 86.5% |
| Micronized corn bran | 10% |
| Xanthan gum | 3.5% |

### Example 2

Another non-limiting composition is described below (by weight percentage).

| | |
|---|---|
| Garbanzo Flour | 82% |
| Fava bean flour | 14.5% |
| Acacia gum | 1.8% |
| Xanthan gum | 1.8% |

### Example 3

Comparative composition is described below (by weight percentage):

| | |
|---|---|
| Garbanzo Flour | 51% |
| Fava bean flour | 39% |
| Acacia gum | 6.8% |
| Arrowroot starch | 3.4% |

### Example 4

The compositions of Examples 1-2 and other compositions disclosed herein are used to replace eggs in traditional recipes, e.g. in baked goods, such as cakes, muffins, pastries, or cookies. The resulting foods, in this case baked goods, have superior qualities as compared to products baked with other egg substitutes. For example the mouthfeel of a yellow cake baked using the compositions of Examples 1-2 is more similar to yellow cake baked with eggs than yellow cake baked using previously attempted egg substitutes.

Mouthfeel ratings will demonstrate these similarities.

| **Product** | **Mouthfeel rating** |
|---|---|
| Yellow cake baked with eggs | +++++ |
| Yellow cake baked with Example 1 composition | +++++ |
| Yellow cake baked with Example 2 composition | +++++ |
| Yellow cake baked using Egg Beaters TM | + |
| Yellow cake baked with Ener-GTM | ++ |
| Yellow cake baked with banana as egg substitute | + |
| Yellow cake baked with Bob's Red MillTM | ++ |
| Yellow cake baked with Organ egg powderTM | ++ |
| Yellow cake baked with Silken TofuTM | + |
| Yellow cake baked with flax seed meal | + |
| Yellow cake baked with applesauce as egg substitute | + |
| Yellow cake baked with vinegar and baking soda as egg substitute | + |
| Yellow cake baked with buttermilk and yogurt as egg substitute | + |

### Example 5

In another example the taste of a cookie baked using the compositions of Examples 1-2 and further compositions described herein will be more similar a cookie baked using eggs than previously attempted egg substitutes.

Taste ratings will demonstrate these similarities.

| **Product** | **Taste rating** |
|---|---|
| Cookie baked with eggs | +++++ |
| Cookie baked with Example 1 composition | +++++ |
| Cookie baked with Example 2 composition | +++++ |
| Cookie baked using Egg BeatersTM | + |
| Cookie baked with Ener-GTM | + |
| Cookie baked with banana as egg substitute | ++ |
| Cookie baked with Bob's Red MillTM | + |
| Cookie baked with Organ egg powderTM | + |
| Cookie baked with Silken TofuTM | + |
| Cookie baked with flax seed meal | ++ |
| Cookie baked with applesauce as egg substitute | ++ |
| Cookie baked with vinegar and baking soda as egg substitute | + |
| Cookie baked with buttermilk and yogurt as egg substitute | + |

### Example 6

Foods prepared using the compositions provided herein will be shown to have substantially identical properties as foods prepared using natural eggs. A composition provided herein will allow the preparation of egg-free foods with substantially identical viscosity, binding properties, thickening properties, leavening properties, emulsifying properties, texture, color, and/or flavor.

Human assessments will demonstrate the substantially identical properties

| Product | Viscosity | Binding properties | Thickening properties | Leavening properties | Emulsifying properties | texture | color | flavor |
|---|---|---|---|---|---|---|---|---|
| Food prepared with eggs | baseline | baseline | baseline | baseline | baseline | baseline | baseline | baseline |
| Food prepared with Example 1 composition | Pass | Pass | Pass | Pass | Pass | Pass | Pass | Pass |
| Food prepared with Example 2 composition | Pass | Pass | Pass | Pass | Pass | Pass | Pass | Pass |
| Food prepared using Egg BeatersTM | Fail on one or more measures | | | | | | | |
| Food prepared with Ener-GTM | Fail on one or more measures | | | | | | | |
| Food prepared with banana as egg substitute | Fail on one or more measures | | | | | | | |
| Food prepared with Bob's Red MillTM | Fail on one or more measures | | | | | | | |
| Food prepared with Organ egg powderTM | Fail on one or more measures | | | | | | | |
| Food prepared with Silken TofuTM | Fail on one or more measures | | | | | | | |
| Food prepared with flax seed meal | Fail on one or more measures | | | | | | | |
| Food prepared with applesauce as egg substitute | Fail on one or more measures | | | | | | | |
| Food prepared with vinegar and baking soda as egg substitute | Fail on one or more measures | | | | | | | |
| Food prepared with additional compositions disclosed herein | Pass | Pass | Pass | Pass | Pass | Pass | Pass | Pass |
| Food prepared with buttermilk and yogurt as egg substitute | Fail on one or more measures | | | | | | | |

### Example 6B

### Commercial egg-replacers tested in cake against an egg

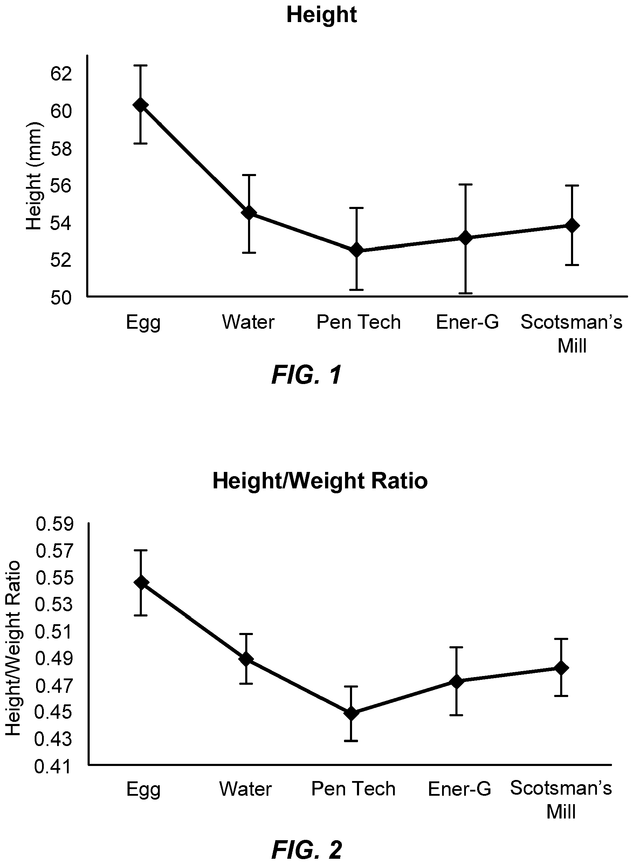

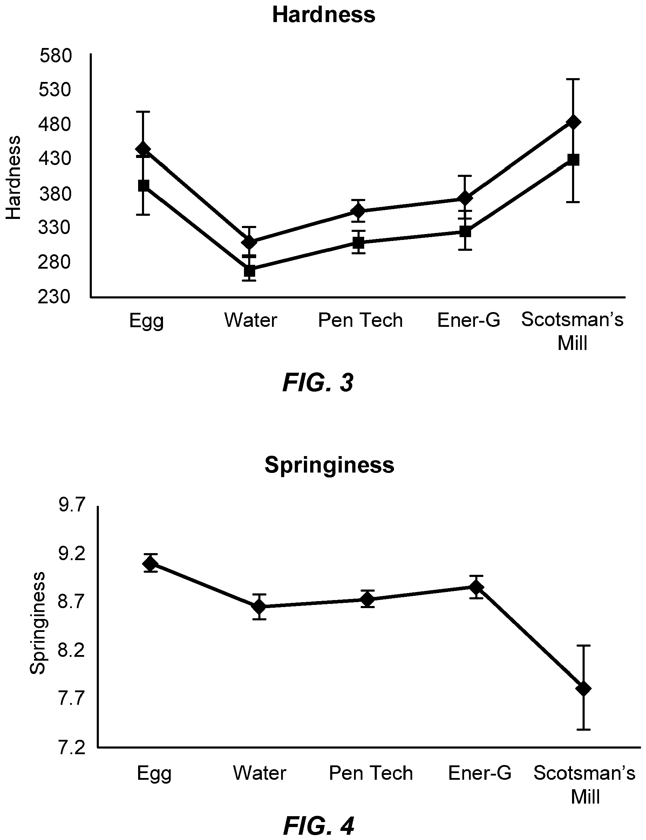

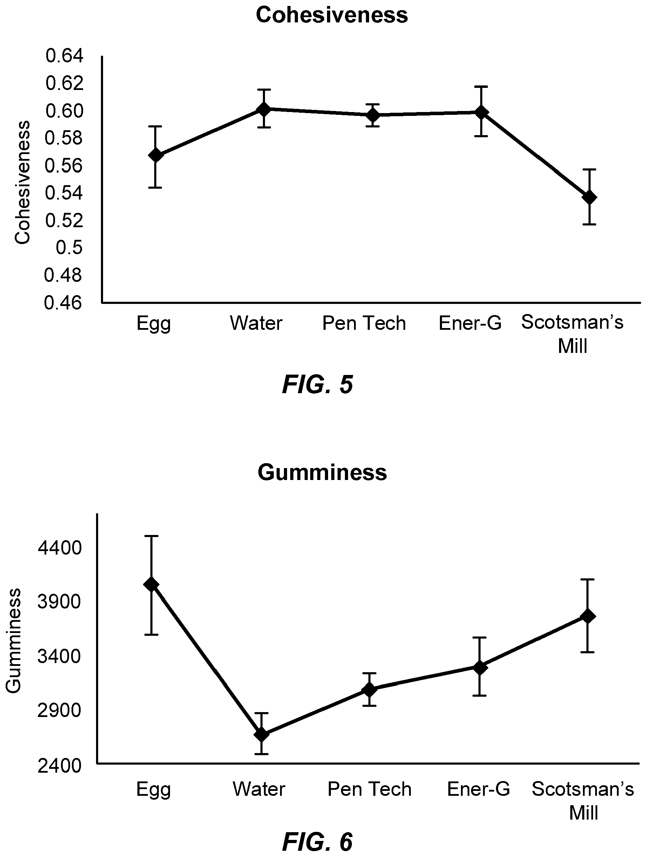

As seen in the following table and **Figure 1** through **Figure 6**, commercially available products achieved ratings similar to the blank (no egg, just water) in most quality parameters.

| Ingredients (g) | Egg | Water | EnerG | PenTech | Scotsman Mill |
|---|---|---|---|---|---|
| Egg | 208 | | | | |
| Water | | 131.92 | 73 | 71.52 | 78 |
| EnerG | | | 15.2 | | |
| Pan Tech | | | | 12 | |
| Scotsman Mill | | | | | 26 |
| All purpose Flour | 225 | 225 | 112.5 | 112.5 | 112.5 |
| Cake flour | 225 | 225 | 112.5 | 112.5 | 112.5 |
| oil | 200 | 200 | 100 | 100 | 100 |
| baking powder | 15 | 15 | 7.5 | 7.5 | 7.5 |
| Salt | 5 | 5 | 2.5 | 2.5 | 2.5 |
| Sugar | 225 | 225 | 112.5 | 112.5 | 112.5 |
| milk | 282.5 | 282.5 | 141.25 | 141.25 | 141.25 |
| Total | 1385.5 | 1309.42 | 676.95 | 672.27 | 692.75 |
| % Water | 0.316 | 0.316 | 0.316 | 0.316 | 0.316 |

### Example 7

### Replacing eggs in mayonnaise

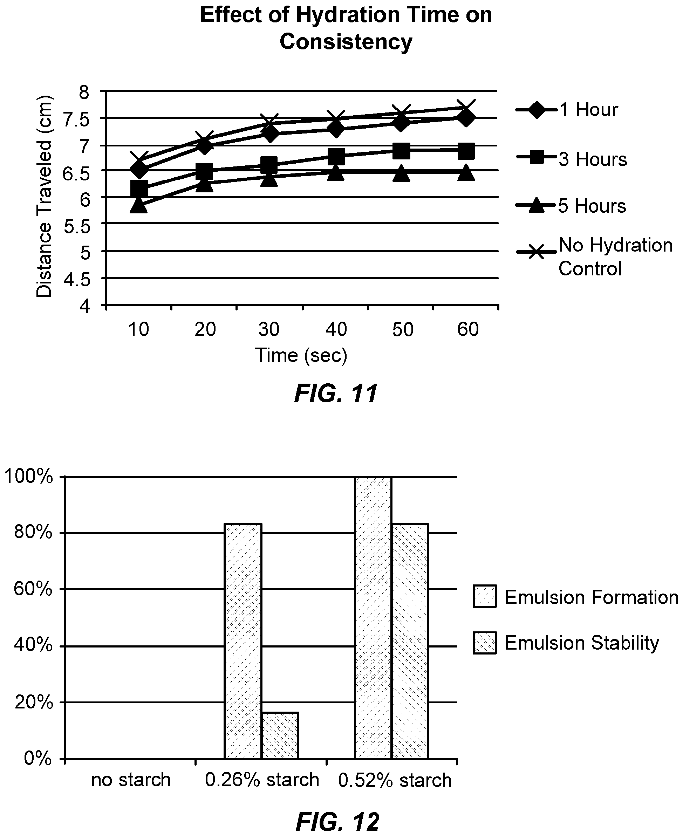

Eggs in standard full-fat mayonnaises (e.g a 78% full-fat mayonnaise) can be replaced by a blend of 50% pea protein isolate and 50% modified starch. The pea protein contains 80% protein, a maximum of 10% carbohydrate, a maximum of 3% fat, and maximum of 1% fiber. The modified starch is a cold-water soluble modified starch derived from waxy maize. See Figure 12.

### Example 8

### Replacing eggs in mayonnaise

Eggs in standard full-fat mayonnaises (e.g a 78% full-fat mayonnaise) can be replaced by a blend of 59% pea protein isolate and 41% modified starch. The pea protein contains 80% protein, a maximum of 10% carbohydrate, a maximum of 3% fat, and maximum of 1% fiber. The modified starch is a cold-water soluble modified starch derived from waxy maize. See Figure 12.

### Example 9

### Food products equivalent to full-fat mayonnaise

Compositions of the inventions are useful for the production of food products that are substantially identical to food products produced with real eggs. For example the compositions disclosed in Example 7 and 8 produce a product which is substantially similar to standard 78% full-fat mayonnaises. This will result in a product containing no egg or egg byproducts that when rated by a human is substantially the same as a standard full-fat mayonnaise.

In this example, pre-hydrating the protein (incubating the flour with water for 24 hours) gives a much thicker and stronger emulsion.

### Example 10

Extraction of pea protein from an off-the-shelf pea protein product results in better results compared to use of the off-the-shelf pea protein product.

### Example 11

A few dozen iterations of making mayonnaise with pea protein and starch (as above) in combination with a wide range of commercial gums and starches resulted in different product structures. Emulsion stability was highest using the pea protein/starch combination of Example 7 and Example 8.

These gums and starches include: guar gum, xanthan gum, carboxymethylcelluloses and other maize starches in varying concentrations.

### Example 12

Addition of gums and cellulose makes the structure of the egg substitute more creamy and smooth, but the stability of the emulsion may be less than without.

A typical formulation for a creamy egg substitute for an emulsion is:
46% pea protein isolate
46% modified starch
4% mix of guar gum and xanthan gum
4% carboxymethylcellulose

### Example 13

Replacing eggs in bakery products: cookies
An egg-replacer for cookies is:
74% cold milled sorghum flour
17% baking soda
8.3% micronized corn bran
0.6 % xanthan gum

A second egg-replacer formulation in a range of cookies (chocolate chip, oatmeal raisin, peanut butter and snickerdoodle):
86% garbanzo(chickpea) flour
10% micronized corn bran
3.2% baking powder
0.8% xanthan gum

### Example 14

### Cold milling methodology

Seeds milled in the presence of liquid nitrogen preserve protein conformation allowing them to remain more functional in the application. A typical formulation is cold milling of seeds to form flour that is used as a replacement for flour from seeds milled at ambient or elevated temperatures in any of the above uses or recipes.

### Example 15

### Replacing eggs in bakery products: cakes and muffins

Both cold- and ambient-milled extracts from the following seeds are tested for leavening, cohesiveness and springiness in muffins: Sorghum, White sorghum, Soy bean, Millet, Vallarta, Stueben, Green fagelot, Black beluga, Black calypso, Chana dal, Amaranth, Lentil, Red lentil, Black lentil, Golden lentil, Do pung-style lentil, Sprouted green lentil, Sweet brown rice, Navy bean, Red bean, Pink bean, Canellini bean, Giant white lima bean, Christmas lime bean, Baby lima bean, Mung bean, Peeled fava bean, Good mother stellard bean, Cranberry chorlottis bean,Santa maria pinguinto bean, Brown tepary bean, Black turtle bean,Yellow split pea, Black turtle beans, Brown teff flour, Rye flour, Quinoa flour, Potato flour, White rice flour, Brown rice flour, Oat flour, Buckwheat flour, Whole grain corn flour, Stone ground cornmeal, Pre-cooked split pea, Pre-cooked garbanzo flour, Arrowroot powder, and Potato starch.

### Example 16

### Muffins

Following a standard recipe for muffins, 11 different types of muffins were made. Each batter was made at half recipe. The equivalent of a whole egg was mixed for each substitute, but only half the formulation was used in the recipe consistent with the half recipe batter volume.

| | Change in Recipe | Result |
|---|---|---|
| 1 | Water control- (15 grams of water) | Bland/bready |
| 2 | Egg control- (1/2 an egg mixed) | airier, sweeter, more flavor |
| 3 | Garbanzo flour and Fava Bean Protein | crumbly |
| 4 | Pea Protein and Fava Bean Protein | good mouthfeel |
| 5 | Precooked Split Red Lentil Powder and Fava Bean Protein | Mostly sweet |
| 6 | Precooked Split Yellow Pea Powder and Fava Bean Protein | Egg taste |
| 7 | Pea Protein (no fava bean protein) | good mouthfeel |
| 8 | Precooked Split Red Lentil Powder (no fava bean protein) | Rich flavor |
| 9 | Precooked Split Yellow Pea Powder (no fava bean protein) | Sweet |
| 10 | Precooked Split Red Lentil Powder (no fava bean protein) with 0.1 gram of egg powder flavor | Egg flavoring not noticeable |
| 11 | Garbanzo flour and Fava Bean Protein with 0.1 gram of egg powder flavor | Egg flavoring not noticeable |

### Example 17

### Muffins

Following a standard recipe for muffins, 6 different types of muffins were made. Each batter was made at half recipe. The equivalent of a whole egg was mixed for each substitute, but only half the formulation was used in the recipe consistent with the half recipe batter volume.

| Ingredient (grams) | Egg | Water | 1 | 2 | 3 | 4 |
|---|---|---|---|---|---|---|
| Egg | 25 | 0 | 0 | 0 | 0 | 0 |
| Water | 0 | 12.5 | 12.5 | 12.5 | 12.5 | 12.5 |
| Example 3 | 0 | 0 | 1.5 | 3 | 5.5 | 9 |
| Flour | 125 | 125 | 125 | 125 | 125 | 125 |
| Sugar | 98.5 | 98.5 | 98.5 | 98.5 | 98.5 | 98.5 |
| Salt | 1.5 | 1.5 | 1.5 | 1.5 | 1.5 | 1.5 |
| Baking Powder | 6 | 6 | 6 | 6 | 6 | 6 |
| Milk | 150 | 150 | 150 | 150 | 150 | 150 |
| Vegetable Oil | 49 | 49 | 49 | 49 | 49 | 49 |

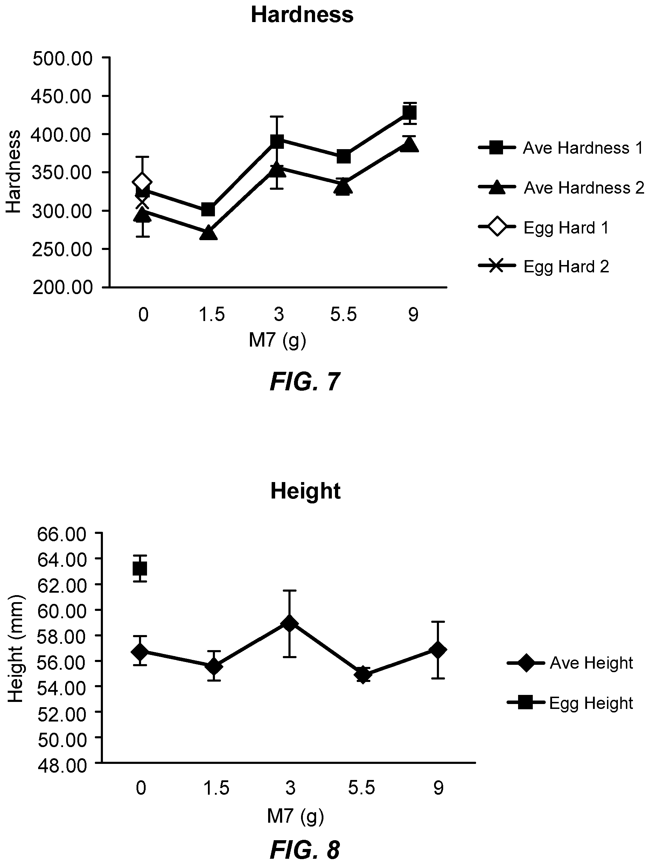

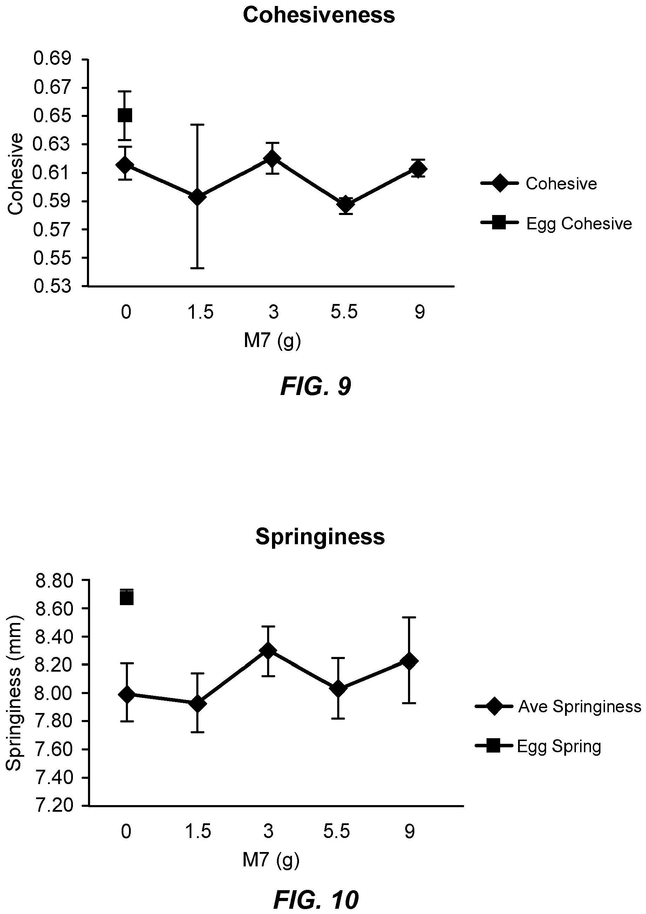

Results are shown in Figure 7 through Figure 10.

### Example 18

Cryo-milled and ambient-milled extracts from the same type of grain or legume are showing different functional effects when used in baking standard recipe muffins. These functional effects comprise important parameters in baked goods such as cohesiveness, springiness, leavening, airiness.

### Example 19

### Extraction methodology

Flours are incubated with water to extract the soluble fraction, which is separated from the pellet by centrifugation after which the supernatant is used in the application.

### Example 20

### Pre-hydrating the protein

Incubating flour with water gave a thicker and stronger emulsion when the composition is used in food preparation. Egg-replacer was incubated with water for 1, 3 or 5 hours before using it to prepare an egg-less mayonnaise. The resulting mayonnaise was tested in a Bostwick consistometer. The thickness of the mayonnaise as reflected in a smaller distance travelled increased with hydration time. Results are shown in Figure 11.

### Example 20

### Fractionating protein

Fractionating protein and adding the light fraction of flours to baked goods results in a better texture compared to adding the corresponding whole flours. Especially the cohesiveness of the baked goods is stronger when prepared with the light fraction. The light fraction can be obtained by methods like centrifuging or air classification.

### Example 21

### Mayonnaise

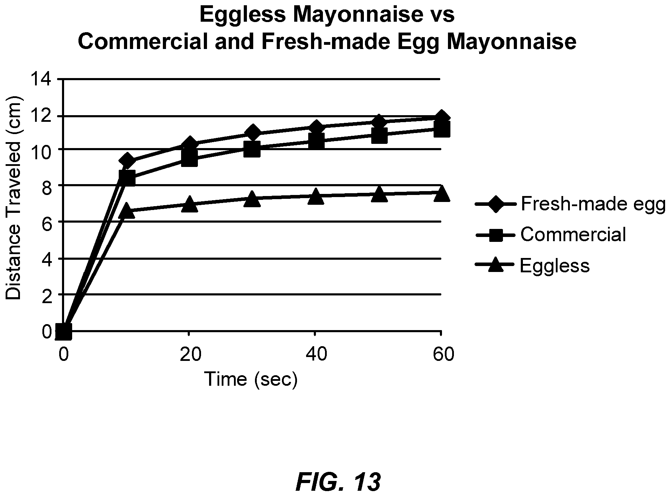

Mayonnaises made with eggs or with a pea protein-starch composition were made and compared at room temperature with a commercial egg-mayonnaise after dilution with 20 vol% water in a Bostwick consistometer. Fresh-made egg mayonnaise and commercial egg mayonnaise have similar consistencies, which is a validation of the mayonnaise production process. The eggless mayonnaise had a thicker consistency than both the commercial and fresh-made egg mayonnaise. See Figure 13.

### Example 22

### Egg-less mayonnaise

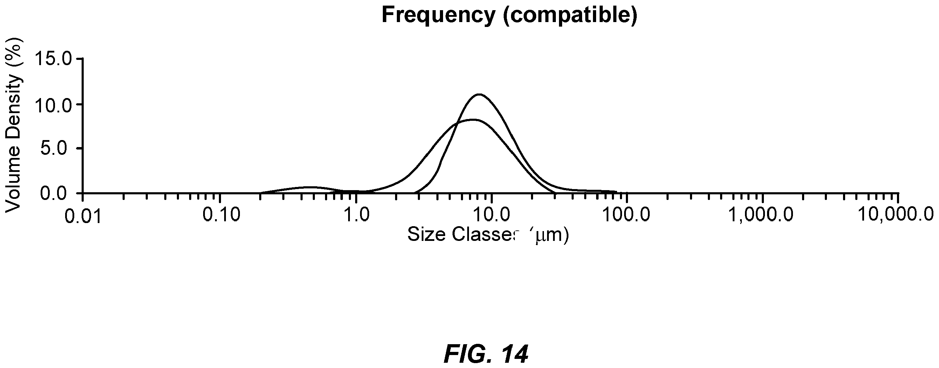

Particle size distribution of a control egg-mayonnaise (Con/dark line) and an eggless mayonnaise (Test/light line) made with pea protein and starch. Both mayonnaises were tested in a Malvern Mastersizer 3000 light-scattering device. The oil droplet size distribution of the eggless mayonnaise is similar to that of the control mayonnaise, demonstrating that using the egg-replacer resulted in a mayonnaise with the same oil droplet distribution as a control egg-mayonnaise. See Figure 14.

### Example 23

### Muffins

Muffins were prepared to test height, cohesiveness, and springiness.

For cryo-milling, beans/grains were placed in liquid nitrogen until thermal equilibrium was reached. Cryogenized beans/grains were milled in a heavy duty blender until the flour temperature reached a temperature of 20°C.

For ambient milling, beans/grains were processed in a heavy duty blender until the flour temperature reached a temperature 90°C after which they were kept at that temperature for 5 min.

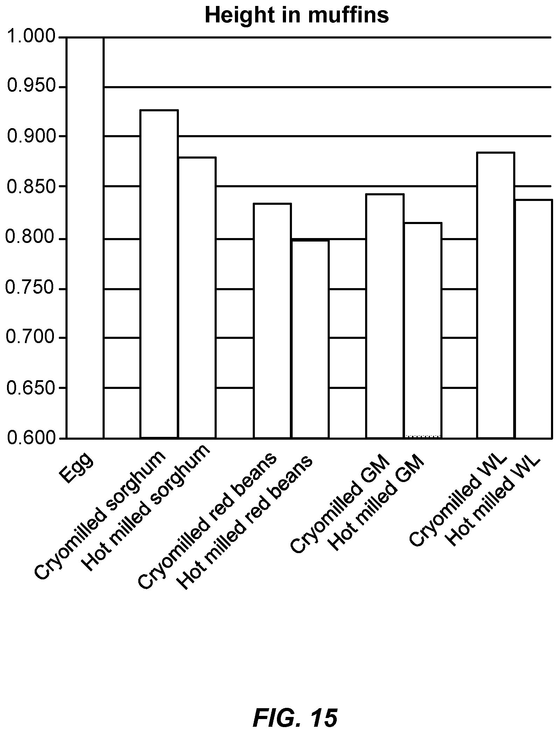

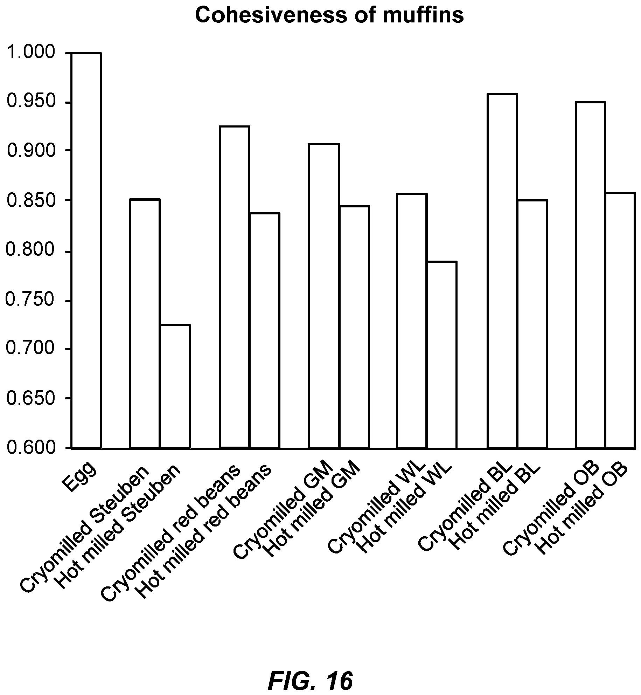

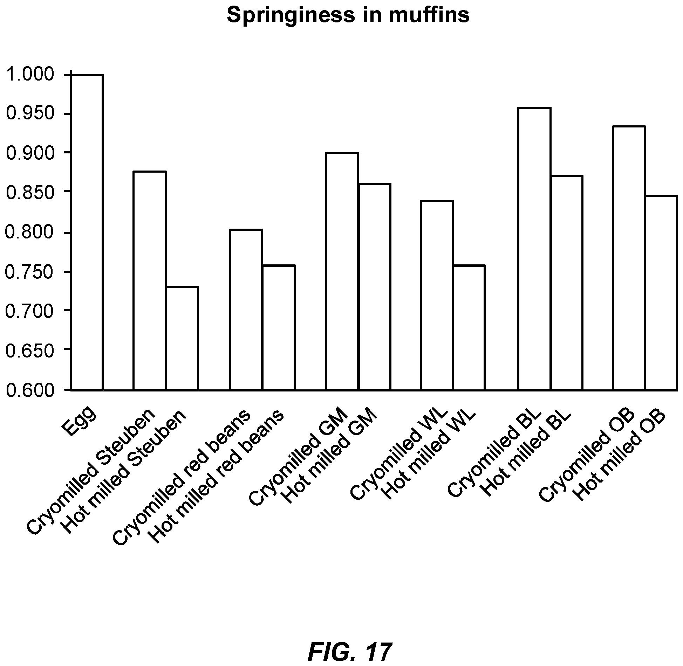

Flours were collected from the blender and were tested in a standard recipe muffin. Cohesiveness and springiness were measured using a Brookfield Texture Analyzer. Height of the muffin was measured using a digital caliper. WL represents giant white lima beans. GM represents good mother stallard beans. BL represents black lentils. OB represents baby lima beans. See Figure 15 through Figure 17.

While particular embodiments of the present invention have been shown and described herein, it will be obvious to those skilled in the art that such embodiments are provided by way of example only. It is intended that the following claims define the scope of the invention and that methods and structures within the scope of these claims and their equivalents be covered thereby.

## Claims

1. An eggless mayonnaise composition, said composition comprising:
(i) yellow pea flour, and
(ii) a modified starch;
wherein said yellow pea flour and said modified starch are in a weight ratio ranging from 6:4 to 4:6, and wherein said yellow pea flour has been pre-hydrated by incubating the flour with water for 24 hours.

2. The eggless mayonnaise composition of claim 1, wherein said flour and said modified starch are in a weight ratio of about 1: 1.

3. The eggless mayonnaise composition of claim 1, wherein said modified starch is a cold-water soluble modified starch derived from waxy maize.

4. The eggless mayonnaise composition of claim 1, wherein the composition further comprises one or more components selected from the group consisting of guar gum, xanthan gum, carboxymethylcellulose, and mixtures thereof.

## Patentansprüche

1. Mayonnaisezusammensetzung ohne Ei, wobei die Zusammensetzung Folgendes umfasst:
(i) gelbes Erbsenmehl, und
(ii) eine modifizierte Stärke;
wobei das gelbe Erbsenmehl und die modifizierte Stärke in einem Gewichtsverhältnis im Bereich von 6:4 bis 4:6 vorliegen und wobei das gelbe Erbsenmehl durch Inkubieren des Mehls mit Wasser für 24 Stunden vorhydratisiert wurde.

2. Mayonnaisezusammensetzung ohne Ei nach Anspruch 1, wobei das Mehl und die modifizierte Stärke in einem Gewichtsverhältnis von etwa 1:1 vorliegen.

3. Mayonnaisezusammensetzung ohne Ei nach Anspruch 1, wobei die modifizierte Stärke eine in Kaltwasser lösliche modifizierte Stärke ist, die aus Wachsmais gewonnen wurde.

4. Mayonnaisezusammensetzung ohne Ei nach Anspruch 1, wobei die Zusammensetzung weiters eine oder mehrere Komponenten umfasst, die aus der aus Guargummi, Xanthangummi, Carboxymethylcellulose und Gemischen davon bestehenden Gruppe ausgewählt ist.

## Revendications

1. Composition de mayonnaise sans oeuf, ladite composition comprenant :
(i) de la farine de pois jaune, et
(ii) un amidon modifié ;
dans laquelle ladite farine de pois jaune et ledit amidon modifié sont dans un rapport pondéral allant de 6:4 à 4:6, et dans laquelle ladite farine de pois jaune a été pré-hydratée par incubation de la farine avec de l'eau pendant 24 heures.

2. Composition de mayonnaise sans oeuf selon la revendication 1, dans laquelle ladite farine et ledit amidon modifié sont dans un rapport pondéral d'environ 1:1.

3. Composition de mayonnaise sans oeuf selon la revendication 1, dans laquelle ledit amidon modifié est un amidon modifié soluble dans l'eau froide dérivé de maïs cireux.

4. Composition de mayonnaise sans oeuf selon la revendication 1, dans laquelle la composition comprend en outre un ou plusieurs composants choisis dans le groupe comprenant la gomme de guar, la gomme de xanthane, la carboxyméthylcellulose, et des mélanges de ceux-ci.
